# NEUE EUROPÄISCHE PATENTSCHRIFT

(11) **EP 1 174 211 B2**
(45) Veröffentlichungstag und Bekanntmachung des Hinweises auf die Entscheidung über den Einspruch: **04.07.2007**
(45) Hinweis auf die Patenterteilung: 08.10.2003
(21) Anmeldenummer: 01110546.7
(22) Anmeldetag: 02.05.2001
(51) Int. Cl.: B23Q 1/76, B23Q 11/00, B23Q 11/08

(54) **Lünette**
Steady rest
Lunette

(30) Priorität: 22.07.2000 DE 20012710 U
(43) Veröffentlichungstag der Anmeldung: 23.01.2002
(73) Patentinhaber: Röhm GmbH, 89567 Sontheim (DE)
(72) Erfinder: Kroisandt, Kurt, 89567 Sontheim-Brenz (DE)
(74) Vertreter: Hentrich, Swen

(56) Entgegenhaltungen:
- DE-A- 3 109 974
- US-A- 4 831 782

## Beschreibung

Die Erfindung betrifft eine Lünette mit den Merkmalen des Oberbegriffs des Patentanspruchs 1.

Bei derartigen aus der Praxis bekannten Lünetten hat es sich erwiesen, daß allein mit den Späneschutzkappen, die mit einer den Laufrollen benachbarten Abstreifkante der Lauffläche des Werkstückes anliegen, ein Eindringen von Spänen zwischen die Laufflächen der Rollen und des Werkstücks nicht mit der erforderlichen Zuverlässigkeit verhindert werden kann.

Der Erfindung liegt daher die Aufgabe zugrunde, eine Lünette der eingangs genannten Art so auszubilden, daß die Wirksamkeit des Späneschutzes verbessert werden kann.

Diese Aufgabe wird nach der Erfindung bei einer Lünette der eingangs genannten Art gelöst durch die Merkmale des kennzeichnenden Teils des Patentanspruchs 1.

Die Erfindung bietet den Vorteil, daß durch das Kühlmittel auch kleinste Partikel erfaßt und weggespült werden, so daß neben die Wirkung der größere Partikel abweisenden Späneschutzkappen, die unverändert vorliegt und ausgenutzt werden kann, die Wirkung des Spülmittels hinzutritt, das die kleinen Partikel erfaßt, die unter der Abstreifkante durchschlupfen könnten, daß aber auch bei größeren Partikeln wirksam ist und so die Abstreifkante unterstützt und entlastet. Von besonderem Vorteil ist dabei die Führung der Kappenleitungen innerhalb der Späneschutzkappen, da so zusätzliche externe, als Schmutzfänger wirkende Bauteile vermieden sind.

Da mit der erfindungsgemäßen Lünette nicht nur Werkstücke mit dem stets selben Durchmesser gespannt werden sollen und die an den Späneschutzkappen ausgebildeten Abstreifkanten möglichst nahe der Auflagefläche der Laufrollen an dem Werkstück positioniert sein sollen, ist es erforderlich, bei wechselnden Durchmessern des Werkstückes die Späneschutzkappe neu ausrichten zu und dazu in Umfangsrichtung der Laufrolle verschieben zu können, wozu die Staubschutzkappe durch die Kraft einer Feder verstellbar ist und der Oberfläche des Werkstückes angepreßt wird. Der Druckraum dient dazu, bei den unterschiedlichen Stellungen eine Übergabe des Spülmittels aus dem Spannarm in die Späneschutzkappe zu ermöglichen.

Eine besonders gute Schutzwirkung für die Laufflächen ergibt sich, wenn die Kappenleitungen mit ihren Kappenmündungen zur gegenüber der Lauffläche tangentialen Freisetzung des Spülmittels in den Späneschutzkappen verlegt sind.

Die an den den Spannarmen zugeordneten Laufrollen verbesserte Schutzwirkung ist auch für die im mittleren Halteglied plazierte Laufrolle wünschenswert, so daß gemäß einer weiteren Ausführungsform der Erfindung vorgesehen ist, daß benachbart zu dem mittleren Halteglied im Lünettenkörper eine durch einen Deckel mit mindestens einer Austrittsöffnung abgedeckte, mit dem Spülmittelreservoir verbundene Ausnehmung ausgebildet ist.

Da in den meisten Anwendungsfällen die Lünette so eingebaut wird, daß das mittlere, translatorisch zu verstellende Halteglied einen Winkel mit der Waagerechten einschließt, ist es günstig, wenn die Ausnehmung beidseits des mittleren Haltegliedes ausgebildet ist, da so stets eine relativ zum mittleren Halteglied unten liegende, der Sammelstelle der Späne zugewandte Ausnehmung zur Späneabweisung zur Verfügung steht. Bei einer derartigen Ausführungsform ist dann weiterhin vorgesehen, daß die in Abhängigkeit der Orientierung der Lünette nicht benötigte Ausnehmung durch einen Stopfen verschlossen ist, um so zum einen den Verbrauch von Spülmittel einzuschränken und eine Verschmutzung der momentan nicht benötigten Ausnehmung zu vermeiden.

Prinzipiell ist es möglich, als Spülmittel ein beliebiges Fluid zu verwenden, da beispielsweise die anfallenden Späne auch mit Luft hohen Druckes umspült und weggespült werden können. Günstig ist allerdings, wenn als Spülmittel das Kühlmittel vorgesehen ist, da so mit der Erfindung ein zusätzlicher Nutzen erzielt werden kann.

Im folgenden wird die Erfindung an einem in der Zeichnung dargestellten Ausführungsbeispiel näher erläutert; es zeigen:
- Fig. 1: eine Ansicht der erfindungsgemäßen Lünette in Längsrichtung des Werkstückes mit diesem nicht anliegenden Laufrollen,
- Fig. 2: eine der Darstellung der Fig. 1 entsprechenden Teilansicht der erfindungsgemäßen Lünette mit dem Werkstück anliegenden Laufrollen,

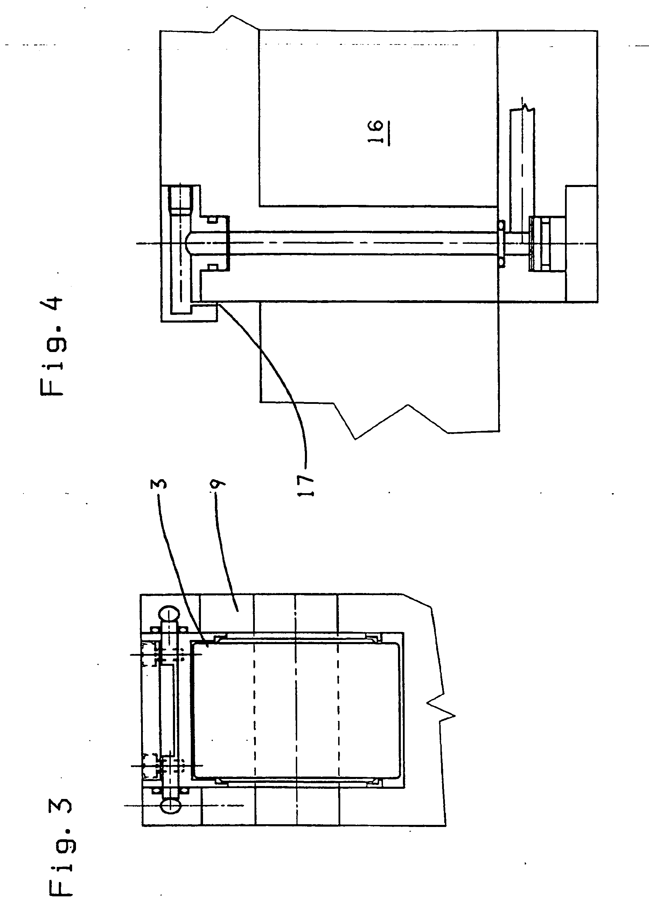

- Fig. 3: der Schnitt III-III aus Fig. 1,
- Fig. 4: der Schnitt IV-IV aus Fig. 1,

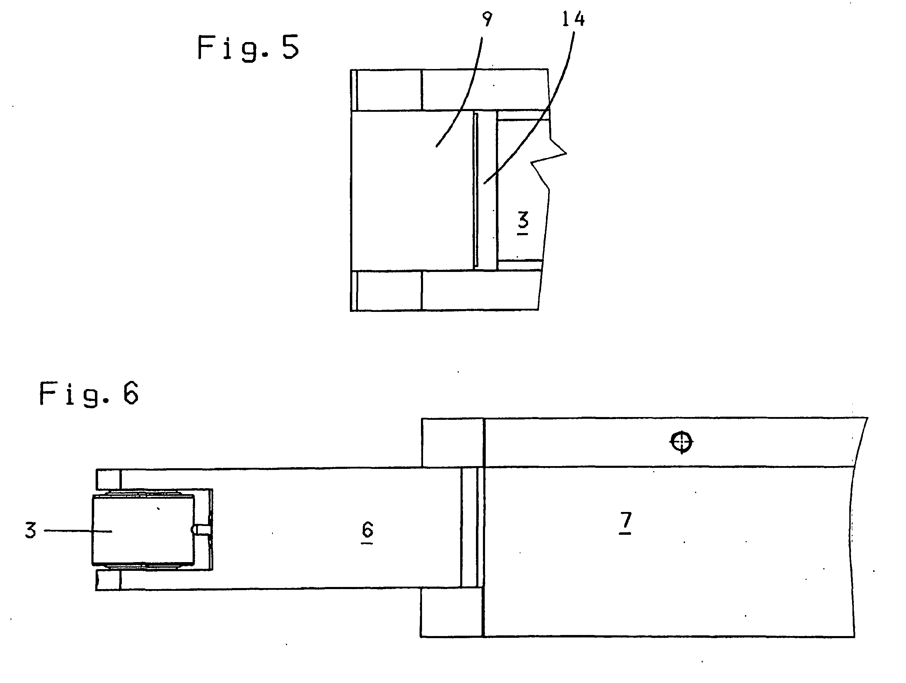

- Fig. 5: eine Sicht aus Richtung des Pfeiles V aus Fig. 1, und
- Fig. 6: eine Draufsicht auf einen im Lünettenkörper gelagerten Spannarm.

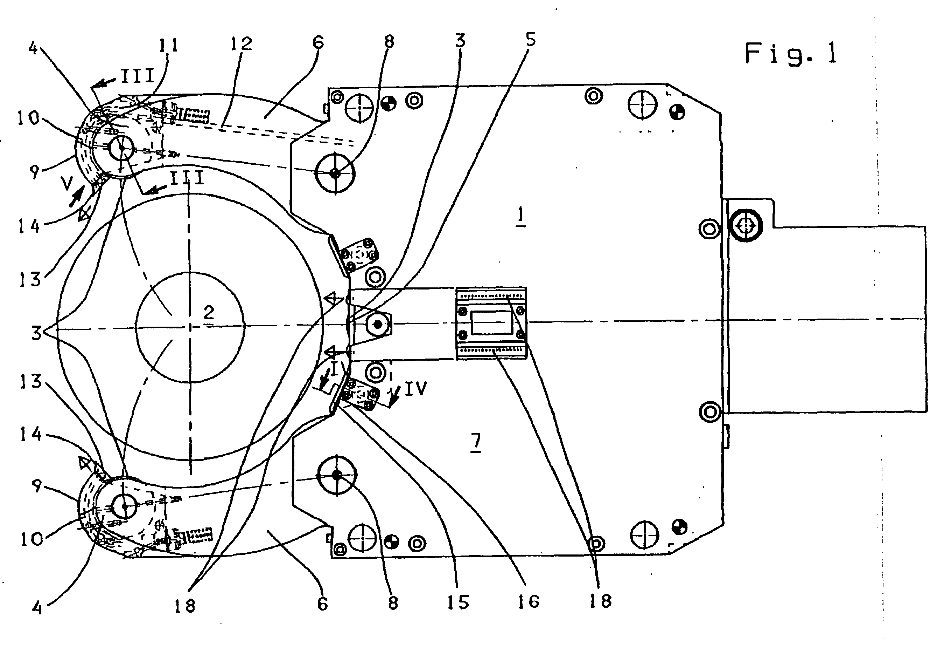

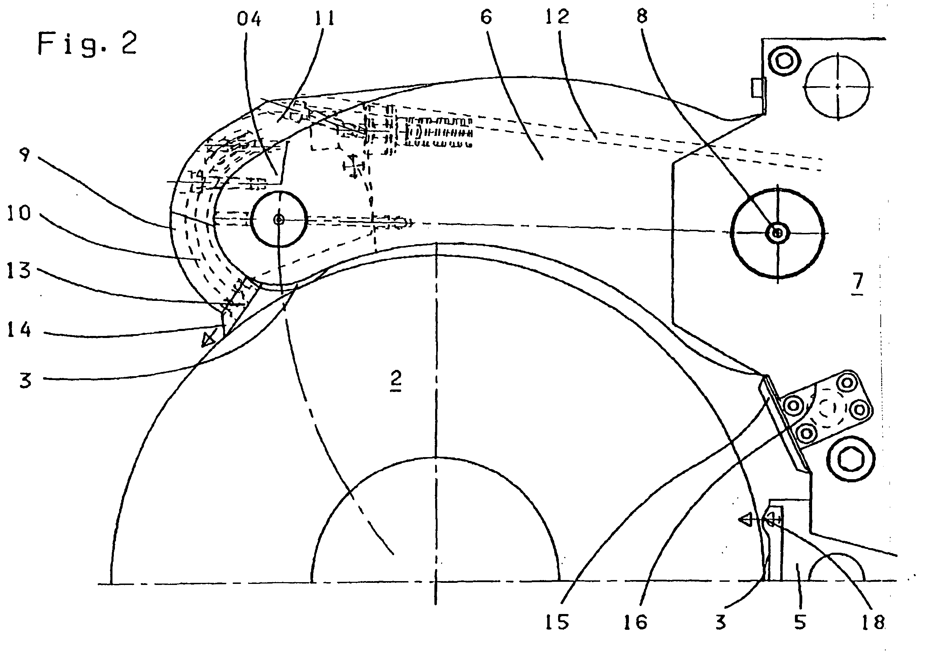

Die in den Figuren 1 und 2 dargestellte selbstzentrierende Lünette 1 zum zentrischen Spannen von stangenförmigen Werkstücken 2 kreisförmigen Durchmessers an einer Drehmaschine besitzt drei in einer gemeinsamen Ebene angeordnete, Laufrollen 3 aufweisende Halteglieder 4, 5, wobei die zwei äußeren Halteglieder 4 Spannarmen 6 zugeordnet sind, die um im Lünettenkörper 7 angeordnete Gelenkbolzen 8 verschwenkt werden können. An den Spannarmen 6 sind in Umfangsrichtung der Laufrollen 3 verschiebbar gelagerte Späneschutzkappen 9 angeordnet, in den interne Kappenleitungen 10 ausgebildet sind, die mit einem gleichfalls in den Späneschutzkappen 9 ausgebildeten Druckraum 11 in Verbindung stehen, der unabhängig von der jeweiligen Lage der Späneschutzkappen 9 mittels in den Spannarmen 6 ausgebildeten Spülmittelleitungen 12 aus einem Reservoir von Spülmittel gespeist wird. Als Spülmittel wird das Kühlmittel genutzt, so daß neben dem verbesserten Schutz vor Verschmutzung auch der Zusatznutzen einer verbesserten Kühlung hinzutritt. Aus dem Druckraum 11 wird das Spülmittel durch die Kappenleitungen 10 den Kappenmündungen 13 zugeführt. Aus diesen Kappenmündungen 13 tritt das Spülmittel vor den dem Werkstück 2 anliegenden Abstreifkanten 14 der Späneschutzkappen 9 aus, wobei die Kappenleitungen 10 mit ihren Kappenmündungen 13 zur gegenüber der Lauffläche tangentialen Freisetzung des Spülmittels verlegt und orientiert sind.

Das mittlere Halteglied 5 ist relativ zum Werkstück 2 geradlinig verstellbar. Benachbart zu diesem mittleren Halteglied 5 ist in dem Lünettenkörper 7 eine durch einen Austrittsöffnungen 17 aufweisenden Deckel 15 abgedeckte, mit dem Spülmittelreservoir verbundene Ausnehmung 16 ausgebildet, wobei diese in dem in der Zeichnung dargestellten Ausführungsbeispiel beidseits des mittleren Haltegliedes 5 ausgebildet ist, und zwar in der Fig. 1 in der Zeichenebene oberhalb und unterhalb des mittleren Haltegliedes 5. Die Austrittsöffnung 17 ist in dem Deckel 15 dabei stets auf der dem mittleren Halteglied 5 zugewandten Seite angeordnet. Weiterhin sind im mittleren Halteglied 5 zwei Kühlmittelaustrittsöffnungen 18 ausgebildet, die auch die Anlagefläche der Laufrolle 3 an dem Werkstück 2 frei von Spänen halten, und zwar unabhängig von dessen Drehrichtung. Dabei kann in Abhängigkeit der Orientierung der Lünette 1, die in der Regel eine von der Waagerechten abweichende Einbaulage aufweist, die nicht benötigte Ausnehmung 16 durch einen Stopfen verschlossen sein.

## Patentansprüche

1. Lünette zum zentrischen Spannen von stangenförmigen Werkstücken (2) kreisförmigen Durchmessers an einer Drehmaschine, mit drei in einer gemeinsamen Ebene angeordneten, Laufrollen (3) aufweisenden Haltegliedern (4, 5), von denen die zwei äußeren Halteglieder (4) Spannarmen (6) zugeordnet sind, die um im Lünettenkörper (7) angeordnete Gelenkbolzen (8) verschwenkbar sind, und das mittlere Halteglied (5) relativ zum Werkstück (2) geradlinig verstellbar ist, ferner mit an den Spannarmen (6) angeordneten Späneschutzkappen (9) zur Vermeidung des Eindringens von Spänen zwischen die Laufflächen der Laufrollen (3) und des Werkstücks (2), wobei in den Spannarmen (6) Spülmittelleitungen (12) zur Versorgung von in den Späneschutzkappen (9) ausgebildeten internen Kappenleitungen (10) vorgesehen sind, die das Spülmittel auf den Laufflächen freisetzende Kappenmündungen (13) aufweisen, **dadurch gekennzeichnet, daß** die Späneschutzkappen (9) in Umfangsrichtung der Laufrollen (3) verschiebbar an den Spannarmen (6) gelagert sind und für den Übertritt des Spülmittels aus den Spannarmen (6) in die Späneschutzkappen (9) ein der Mündung der Spülmittelleitungen (12) oder der internen Kappenleitungen (10) in dem anderen Bauteil gegenüberliegender Druckraum (11) ausgebildet ist.

2. Lünette nach Anspruch 1, **dadurch gekennzeichnet, daß** die Kappenleitungen (10) mit ihren Kappenmündungen (13) zur gegenüber der Lauffläche tangentialen Freisetzung des Spülmittels in den Späneschutzkappen (9) verlegt sind.

3. Lünette nach Anspruch 1 oder 2, **dadurch gekennzeichnet, daß** benachbart zu dem mittleren Halteglied (5) im Lünettenkörper (7) eine durch einen Deckel (15) mit mindestens einer Austrittsöffnung (17) abgedeckte, mit dem Spülmittelreservoir verbundene Ausnehmung (16) ausgebildet ist.

4. Lünette nach Anspruch 3, **dadurch gekennzeichnet, daß** die Ausnehmung (16) beidseits des mittleren Halteglieds (5) ausgebildet ist.

5. Lünette nach Anspruch 4, **dadurch gekennzeichnet, daß** die in Abhängigkeit der Orientierung der Lünette (1) nicht benötigte Ausnehmung (16) durch einen Stopfen verschlossen ist.

6. Lünette nach einem der Ansprüche 1 bis 5, **dadurch gekennzeichnet, daß** als Spülmittel das Kühlmittel vorgesehen ist.

## Claims

1. A steady rest for the centered clamping of bar-shaped workpieces (2) of circular diameter on a lathe, featuring three retaining members (4, 5) disposed in a common plane and incorporating guiding rollers (3), the two outer retaining members (4) being associated with clamping arms (6) which are adapted to swivel about joint bolts (8) arranged in the body (7) of the steady rest, and the middle retaining member (5) being adjustable in a straight line in relation to the workpiece (2), and also featuring anti-swarf covers (9) arranged on the clamping arms (6) in order to prevent swarf from penetrating between the bearing surfaces of the guiding rollers (3) and of the workpiece (2), wherein provided in the clamping arms (6) are scavenging fluid lines (12) in order to supply internal cover lines (10) provided in the anti-swarf covers (10), said internal lines (10) having cover openings (13) which release the scavenging fluid on to the bearing surfaces, **characterised in that** the anti-swarf covers (9) are mounted on the clamping arms (6) displaceably in the circumferential direction of the guiding rollers (3) and a pressure compartment (11) opposite the opening of the scavenging fluid lines (12) or the internal cover lines (10) in the other component is provided for transferring the scavenging fluid out of the clamping arms (6) into the anti-swarf covers (9).

2. A steady rest according to claim 1 **characterised in that** the cover lines (10) are laid in the anti-swarf covers (9) with their cover openings (13) in order to release the scavenging fluid tangentially in relation to the bearing surface.

3. A steady rest according to claim 1 or claim 2 **characterised in that** provided adjacent to the middle retaining member (5) in the body (7) of the steady rest is a recess (16) which is connected to the scavenging fluid reservoir and which is covered by a cover (15) with at least one discharge opening (17).

4. A steady rest according to claim 3 **characterised in that** the recess (6) is provided on both sides of the middle retaining member (5).

5. A steady rest according to claim 4 **characterised in that** the recess (16) which is not required in dependence on the orientation of the steady rest (1) is closed by a stopper.

6. A steady rest according to one of claims 1 to 5 **characterised in that** the coolant is provided as the scavenging fluid.

## Revendications

1. Lunette pour le serrage centré de pièces à usiner (2) de section circulaire, en forme de barre, sur une machine de tournage, comprenant trois organes de maintien (4, 5) disposés dans un plan commun et présentant des galets de roulement (3), les deux organes de maintien (4) extérieurs étant associés à des bras de serrage (6) pivotant autour d'axes d'articulation (8) disposés dans le corps de lunette (7) et l'organe de maintien (5) médian étant mobile en translation rectiligne par rapport à la pièce à usiner (2), ainsi que des capots de protection (9) disposés sur les bras de serrage (6) pour empêcher la pénétration de copeaux entre les surfaces de roulement des galets de roulement (3) et de la pièce à usiner (2), des conduites de fluide de rinçage (12) étant prévues dans les bras de serrage (6) pour l'alimentation de conduites internes (10) formées dans les capots de protection (9) et présentant des orifices (13) libérant le fluide de rinçage sur les surfaces de roulement, **caractérisée par le fait que** les capots de protection (9) sont montés de façon déplaçable en translation dans la direction circonférentielle des galets de roulement (3) sur les bras de serrage (6) et que pour le passage du fluide de rinçage des bras de serrage (6) dans les capots de protection (9), une chambre de pression (11) située en face de l'orifice des conduites de fluide de rinçage (12) des bras de serrage ou des conduites internes (10) des capots est formée dans l'autre composant.

2. Lunette selon la revendication 1, **caractérisée par le fait que** les orifices (13) des conduites internes (10) sont disposées dans des capots de protection (9) de manière à libérer le fluide de rinçage tangentiellement par rapport à la surface de roulement.

3. Lunette selon l'une des revendications 1 ou 2, **caractérisée par le fait qu'**un évidement (16) relié au réservoir de fluide de rinçage et recouvert par un couvercle (15) muni d'au moins une ouverture de sortie (17) est formé dans le corps de lunette (7) au voisinage de l'organe de maintien (5) médian.

4. Lunette selon la revendication 3, **caractérisée par le fait que** l'évidement (16) est formé de part et d'autre de l'organe de maintien (5) médian.

5. Lunette selon la revendication 4, **caractérisée par le fait que** l'évidement (16) qui n'est pas nécessaire compte tenu de l'orientation de la lunette (1) est obturé par un bouchon.

6. Lunette selon l'une des revendications 1 à 5, **caractérisée par le fait que** le fluide de refroidissement est utilisé comme fluide de rinçage.
